Europäisches Patentamt

European Patent Office

Office européen des brevets

(11) Publication number: **0 426 929 A1**

# EUROPEAN PATENT APPLICATION

(21) Application number: 89830488.6

(22) Date of filing: 09.11.89

(51) Int. Cl.⁵: **B01D 3/02**, B01D 3/00, C02F 1/04

(43) Date of publication of application:
**15.05.91 Bulletin 91/20**

(84) Designated Contracting States:
**AT BE CH DE ES FR GB GR LI LU NL SE**

(71) Applicant: **LED ITALIA S.R.L.**
**Via Nuova Di Corva 86/D**
**I-33170 Pordenone(IT)**

(72) Inventor: **Foschini, Ferdinando**

**Via Nuova Di Corva 86/D**
**I-33170 Pordenone(IT)**
Inventor: **Longo, Vincenzo**
**Via Nuova Di Corva 86/D**
**I-33170 Pordenone(IT)**

(74) Representative: **Petraz, Gilberto Luigi**
**GLP S.r.l. Piazzale Cavedalis 6/2**
**I-33100 Udine(IT)**

(54) **A high performance method and evaporator apparatus, particularly for concentrating waste liquids and recovering their raw materials.**

(57) Method and evaporator/distillator apparatus particularly for the recovery and concentration of waste liquid row materials comprising:
- a single distillation section container (1) with evaporation and condensation function by means of a circuit of heat pump (10-4-5-3-2-6) to heat the liquid to be vaporized and concentrated through a condenser (4-5) of said heat pump being the obtained vapor condensed by a respective evaporator of said heat pump in a condensing area (6);
- a distilled recovery section (7) implicating aspiration vacuum means preferably by "Venturi" tube, from said distillation section (1) for aspiring and conveying the respective condensate in containment cooled means, preferably by means of freezing circuit,
characterized in that the distillation chamber in said distillation section container (1), is at low hydrostatic head without partition walls or repsective connection ducts in and between the evaporation zone and the condensing area (6) both placed inside the distillation container (1).

EP 0 426 929 A1

Xerox Copy Centre

EP 0 426 929 A1

FIG.1

# A HIGH PERFORMANCE METHOD AND EVAPORATOR APPARATUS PARTICULARLY FOR CONCENTRATING WASTE LIQUIDS AND RECOVERING THEIR ROW MATERIALS.

The present invention has for object a method and high performance evaporator apparatus particularly for concentrating waste liquids and recovering their row materials.

The invention finds particular and convenient even if not exclusive application in the field of the photographic development plants, galvanic plants, glazier plants, emulsifying oil treatments, solvent treatments, metal industry, tanning activities, and so on, in which the waste liquids are highly pollutant and present the possibility even of recover of row materials.

In prior art the distillation of waste liquids in a large variety of different fields, for the recover of their row materials and contemporarily concentration of the waste products is well known. These plants being also directed to solve the problems of the automatic desalination and conditioning the waters.

Said apparatuses or plants are commonly known as evaporator plants with concentration function and liquids desalination, depollution and conditioning of waters, etc.

Allowedly these plants comprise heating means to heat and evaporating the liquid by means of combustion, or by means of electric resistances or by means of heat pumps or other known physical systems.

Recently great development happened to the heat pump plants.

Plants of such kind have been disclosed and commercialized for a long time, having large diffusion in 1980-1983 (Cfr.Chemical Engineering August 8, 1983, Pages 16,17,18).

In particular plants of such kind were built, disclosed and commercialized in US from Licon Inc. - DEDERT CORPORATION 20000 GOVERNORS Dr. Olympia.Fields, IL 60451 - 1074 (Pensacola, Fla.).

Even in Italy in 1983 similar plants and apparatuses were built and commercialized by the Italian firm IGUANA s.r.l. under the denomination of CN50, CN500, CN2500, CN500, corresponding to respective productions of 50 / 500 / 2500 / 5000 Litres / day (in the 24 hours).

These plants had substantially beyond that the use of a heat pump for allowing to vaporize the liquid treating it by means of the respective condenser in a chamber, allowing to condense the respective vapors in another chamber utilizing for the evaporation the same circuit of said heat pump, providing further to aspire the condensed vapors by means of vacuum pump with "Venturi" system, sending it in a separate tank of recover, where its refrigeration is foreseen by means of freezing circuit.

This solution even if advantageous had forceful foams formation that reduced of fact the efficiency of the plant.

The Italian patent application No.20742A/85 in the name ECOTECNO s.r.l., to the purpose of obviating the mentioned drawbacks, foresees a plant substantially similar to the mentioned plants with:
- a first section comprising said recover tank where is conveyed the liquid to be treated by means of the "Venturi" tube and there cooled by means of freezing circuit;
- a second section that comprises a unique tank comprising "serial chambers connected in fallen one to the other" (Claim 1), obviously, "associated to a heat pump, and the liquid conveied in the lower chamber."

In the specific solution, said serial chambers comprises: "a first lower chamber, a second second intermediate chamber and a third a third upper chamber connected to said aspiration device"- (claim 4). More particularly the "said heat pump comprises a condenser serpentine, housed in the lower chamber of said second section and an evaporator serpentine housed in the upper chamber of the same section (claim 5). The lower chamber is then connected to the intermediate chamber through "tube constituent labyrinth" to break eventual foam bubbles. (claim 6). Advantageously the lower chamber comprises preheating resistance means (claim 7).

Italian Patent Application No.20742A/85, does not solve the problem of the foam formation that is dragged even in the upper chamber polluting the distilled product. This solution do not improving the energetic yield.

The applicant has advantageously discovered that said foam dragging implicating the pollution of the distilled material both in the first solutions and in the second solutions, is caused principally by the high transfer speed of the fluids, or by the excessively reduced sections of fluid passage-way.

The solution of Italian Patent Application No.20742A/85 in the respective purposes had the scope even of improvement of the energetic yield, that of fact is not substantially noticeable.

By a further deepened analysis of the causes that have prevented the attainment of a more effective energetic yield, the inventor has discovered that both the solutions substantially uses a "distillation column system".

Purpose of the present invention is to obviate the mentioned drawbacks allowing the elimination of the lamented foams transfer and improving sensitively the energetic yield.

This and other purposes are reached with the present invention as claimed solving the exposed problems by means of a method and evaporator apparatus particularly for the recovery and concentration of waste liquid row materials comprising:
- a single distillation section container with evaporation and condensation function by means of a circuit of heat pump to heat the liquid to be vaporized and concentrated through the condenser of said heat pump and the obtained vapors is condensed by the evaporator of the said heat pump in a condensing area;
- a recovery section of distilled implicating aspiration vacuum means preferably by "Venturi" tube, from said distillation section for aspiring and conveying the respective condensate in containment cooled means, preferably by means of freezer circuit, characterized in that the distillation chamber is at low hydrostatic head without partition walls or respective connection ducts in and between the evaporation chamber and the condensing area.

This method can be considered similar to previous techniques, but in reality upset the results, being sufficient to consider that the prior art foresee, respective hydrostatic head from four to fourteen times more then the claimed solution of this invention (approx. 1 meter in the solution IGUANA, approx.50 cm. In the solution ECOTECNO).

In fact with the sensible lowering of the distillation head, the evaporation surface in ratio to the liquid treated volume becomes sensitively more high with notable reduction of the effects of the foam formation. This supplies a greater thermic jump between the heating means and the liquid by vaporizing and furthermore makes all the bulk of said liquid boils and vaporize strongly.

Advantageously the chamber of distillation presents a ratio bottom diameter/height, substantially approx or equal to 1 (diameter = height) so the distiller do not assumes the usual form of column, making possible the treatment of the same quantity of liquid with reduced encumber in volume, and increasing the evaporating surface.

In a substantial feature of the invention:
- the vacuum evaporation-concentration chamber (briefly evaporation/distilling chamber) extends for the entire tank/container that defines the distilling section;
- the condensation zone:
- is set centrally into the chamber of evaporation-concentration,
- is opened superiorly,
- is connected to the evaporation surface of the liquid by the annular space realized from the free annular clearance let between the chamber/place of condensation and the perimetrical surface of the of the evaporation chamber. With this solution, we obtain the great advantage of widening sensitively the passage sections of the vapors from the evaporation surface to the condensation zone, avoiding any further dangerous foam formation.

We reach furthermore the advantages of:
- low charge leakages of the vapor with consequent greater vacuum grade,
- low speed of the vapors that makes minimum the foam transfer or liquid particles transfer with consequent greater purity of the distilled.

In the preferred solution the bottom of the distilling container is concave, preferably shaped conically, in order to facilitate the sedimentation on the bottom of the substances more heavy and their respective evacuation through central discharge.

For greater yield of the apparatus:
- the transmission of the heat for the evaporation is carried out with exchanger placed in the bottom and/or in the lateral wall interesting the containment of the liquid to be concentrated;
- the concentration zone under the respective evaporation hydrostatic head of the liquid to be concentrated, comprises a rotative scraper-agitator. With this solution beyond the advantage of preventing the crusts formation that would hinder the transmisssion of the heat and would make difficult the discharge and the successive cleanness of the concentrate, discharging of the concentrate is facilitated, the exchanger surface is maintained always cleaned and is made possible a raise of the yield for a better and more uniform distribution of the heat which transmission is further favoured from the mechanics agitation of the liquid, with further better yield in vaporizing. Advantageously the transmission of the heat for the heating of the liquid to be concentrated is carried out by means of a surface exchanger namely external yacked, rather then in serpentine shape. This solution being particularly advantageous for the fact that allows substantially the utilization of a rotational scraper-agitator that extends for all the containment surface of the liquid to be treated.

These and other advantages will appear from the following description of specified preferred solution of realization with the help of the included drawing which particulars of execution are not to be considered limitative but exemplificative only.

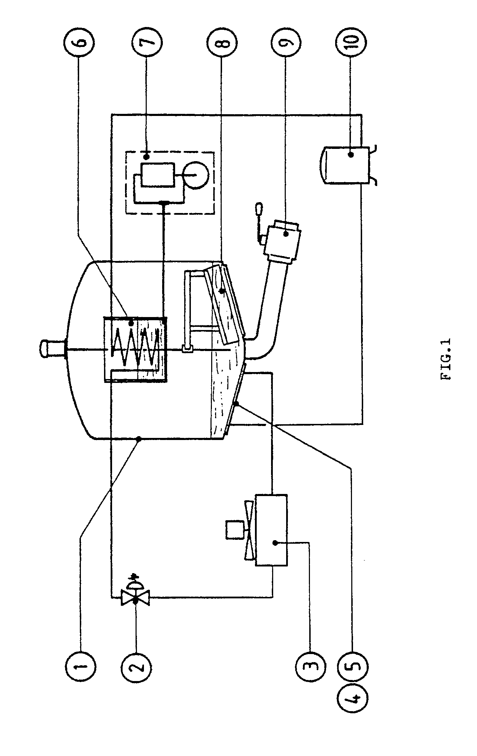

Figure 1 represents a diagrammatic view in axial section of the apparatus as per the invention.

Making reference to the figure must be understood that the evaporator chamber or boiler is like a cylindric container with convex bottom (1) this being the distillation section to evaporate and concentrate the liquid.

Inside centrally of the the evaporation/concentration chamber (1) a superiorly open container with refrigerated serpentine is placed (6) to collect the respective condenses of the vapors.

In the same figure is furthermore foreseen a freezing circuit in heat pump integrated, that comprises:
- a compressor (10) of freezing fluid (e.g., freon);
- a condenser of the freezing fluid (4) in conical shape constituting the heating base (5) of the container (1) to heat the liquid to be concentrated;
- one heat exchanger for further cooling the freezing fluid (3);
a rolling valve (2) connected to the respective serpentine of evaporation of the freon in the container of condenses (6), at his turn closing the circuit by means of connection to the aspiration from the pump (10). Advantageously a rotating scraper-agitator (8) is placed axially on the conic bottom of the concentration container(1), to improve the yield of the plant and facilitates the efflux to the discharge of the concentrate.

The bottom of the container (basin) to collected condenses (6) is connected to a system of vacuum means to aspire the condensed liquid for respective utilization, system that can foresee (not disclosed), a well known cooling system as for instance by connection to a freezing circuit of the kind well known in the prior art.

To the purposes of reducing minimally the noisy a particular system of isolation is provided, first for insulating the system of vacuum formation (high frequency in vacuum operation by "VENTURI" tube) and secondly carrying out a further isolation in the structure of coating for providing to the containment of the respective low frequencies in certain conditions of the vacuum operation, this insulation being useful also to contain noisy from the respective compressors of the freezing circuit.

**Claims**

1. Method and evaporator/distillator apparatus particularly for the recovery and concentration of waste liquid row materials comprising:
- a single distillation section container (1) with evaporation and condensation function by means of a circuit of heat pump (10-4-5-3-2-6) to heat the liquid to be vaporized and concentrated through a condenser (4-5) of said heat pump being the obtained vapor condensed by a respective evaporator of said heat pump in a condensing area (6);
- a distilled recovery section (7) implicating aspiration vacuum means preferably by "Venturi" tube, from said distillation section (1) for aspiring and conveying the respective condensate in containment cooled means, preferably by means of freezing circuit,
**characterized in that** the distillation chamber in said distillation section container (1), is at low hydrostatic head without partition walls or respective connection ducts in and between the evaporation zone and the condensing area (6) both placed inside the distillation container (1).

2. Method and apparatus as claimed in claim 1., characterized in that the hydrostatic distillation head of the liquid to be distilled/concentrated is less then or equal to 15 centimeters, preferably 7-8 centimeters.

3. Apparatus as claimed in claim 1, characterized in that said distillation section container (1):
- is approx cylindric;
- the ratio of its diameter compared to its height is substantially approx equal to 1 (diameter = or approx the high).

4. Apparatus as claimed in claim 1., characterized in that:
- the distillation section container (1) extends for the entire tank/container that defines the distilling section that comprises:
- the condensation zone (6) that:
- is set centrally placed into the distillation section container (1),
- is opened superiorly.

5. Apparatus as claimed in claim 1., characterized in that:
- the distillation section container (1) extends for the entire tank/container that defines the distilling section that comprises:
- the condensation zone (6) that:
- is set centrally placed into the distillation section container (1),
- is opened superiorly,
- is connected to the evaporation surface of the liquid by the annular space realized from the free annular clearance let between the chamber/place of condensation (6) and the perimetrical surface of the of the distillation section container (1) in it evaporation, said condensation zone comprising an upper open container with condensation serpentine exchanger connected heat pump means circuit which further includes a condensated recovery section outside the distillation container.

6. Apparatus as claimed in claim 1., characterized in that bottom of the distillation section container (1) is concave with central discharge (9).

7. Apparatus as claimed in claim 1., characterized in that the bottom of the distillation section container (1) is conical with central discharge (9).

8. Apparatus as claimed in claim 1., characterized in that the transmission of the heat for the evaporation is carried out with exchanger in the bottom and/or in the lateral wall interesting the containment of the liquid to be concentrated (4 - 5);

9. Apparatus as claimed in claim 1., characterized in that on the bottom of the distillation section container (1), and under the respective evaporation head hydrostatic level ofthe liquid to be concentrated, a rotating scraper-agitator (8) is placed.

10. Apparatus as claimed in claim 1., characterized in that the transmission of the heat for the heating of the liquid to be concentrated is carried out by means of an exchanging surface containing an exterior condenser jacket (4 - 5).

11. Apparatus as claimed in claim 1., characterized in that it comprises a double acoustic isolation :
- a first destined to encompass the device for the formation fo the vacuum ;
- a second to encompass the entire apparatus.

FIG.1

EP 0 426 929 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 107 322 (FISONS PLC)<br>* claim 6; figure 1 *<br>--- | 1,3-5,8 | B 01 D  3/02<br>B 01 D  3/00<br>C 02 F  1/04 |
| A | EP-A-0 269 191 (RECYCLENE PRODUCTS)<br>* claim 1; figure 1 *<br>--- | 1,3,10 | |
| A | EP-A-0 153 631 (J.W. MCCORD)<br>* claim 1; figures 1,3 *<br>--- | 1,3,8 | |
| A | DE-A-2 114 269 (GLASURIT-WERKE)<br>* claim 1; figure 1 *<br>--- | 1,3,9 | |
| A | DE-A-3 404 248 (KS FOTOTECHNIK)<br>* claims 1,5; figure *<br>----- | 1 | |

TECHNICAL FIELDS
SEARCHED (Int. Cl.5)

B 01 D  1/00
B 01 D  3/00
B 01 D  3/02
C 02 F  1/04

The present search report has been drawn up for all claims

| Place of search | Date of completion of the search | Examiner |
|---|---|---|
| BERLIN | 20-06-1990 | KUEHN P |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P0401)